# EUROPÄISCHE PATENTSCHRIFT

(11) **EP 3 491 472 B1**
(45) Veröffentlichungstag und Bekanntmachung des Hinweises auf die Patenterteilung: **22.09.2021**
(21) Anmeldenummer: 17742418.1
(22) Anmeldetag: 18.07.2017
(51) Int. Cl.: G05B 19/042

(54) **REIHENMODUL FÜR EINE MODULAR AUSGEBILDETE STEUERUNGSANORDNUNG**
SERIES MODULE FOR A CONTROL ARRANGEMENT HAVING A MODULAR DESIGN
MODULE SÉRIE POUR UN SYSTÈME DE COMMANDE DE CONCEPTION MODULAIRE

(30) Priorität: 26.07.2016 DE 102016213725
(43) Veröffentlichungstag der Anmeldung: 05.06.2019
(73) Patentinhaber: Festo SE & Co. KG, 73734 Esslingen (DE)
(72) Erfinder: WENSKE, Eduard, 70806 Kornwestheim (DE); FORCHT, Ralf, 73240 Wendlingen (DE); HARTMANN, Philippus, 72218 Wildberg (DE)
(74) Vertreter: Patentanwälte Magenbauer & Kollegen Partnerschaft mbB
(86) Internationale Anmeldenummer: PCT/EP2017/068142
(87) Internationale Veröffentlichungsnummer: WO 2018/019664

(56) Entgegenhaltungen:
- EP-A2- 0 692 753
- EP-A2- 2 620 820
- WO-A1-2013/075729
- DE-A1- 10 061 686
- DE-A1-102005 028 735
- DE-B3-102014 008 796

## Beschreibung

Die Erfindung betrifft ein Reihenmodul für eine modular ausgebildete Steuerungsanordnung mit einer ersten Reihenschnittstelle und einer ersten Busschnittstelle sowie einer zweiten Reihenschnittstelle und einer zweiten Busschnittstelle, wobei zwischen den beiden Busschnittstellen eine Buskommunikationsleitung und zwischen den beiden Reihenschnittstellen mehrere Verbindungsleitungen ausgebildet sind.

Aus der DE 11 2013 002 370 T5 ist ein Elektromagnetventilsystem bekannt, bei dem eine Mehrzahl erster bis dritter Elektromagnetventileinheiten in eine Mehrzahl erster bis dritter Gruppen unterteilt ist, wobei diesen Gruppen eine Sicherheitsstromquellensteuereinheit zugeordnet ist, um die ersten bis dritten Elektromagnetventileinheiten für jede der ersten bis dritten Gruppen zu steuern.

Aus der EP 0 692 753 A2 ist eine Eingangs/Ausgangs-Einheit bekannt, bei der ein Bussignal über eine Busleitung zwischen einer ersten Busschnittstelle und einer zweiten Busschnittstelle übertragen wird und ferner Adresssignale von einem Eingangsanschluss zu einem Ausgangsanschluss weitergeleitet werden, wobei die Verbindungsleitungen zwischen dem Eingangsanschluss und dem Ausgangsanschluss zumindest teilweise Z-verkettet ausgebildet sind.

Die WO 2013/075729 A1 offenbart ein Versorgungsmodul zur Einreihung in eine Modulkette aus längs einer Aufreihungsachse aufgereihten, elektrisch in einer Z-Verkettung miteinander verbundenen Funktionsmodulen; mit einer ersten Kopplungsfläche, die mehrere elektrische Eingangsanschlüsse aufweist sowie mit einer zweiten Kopplungsfläche, die mehrere elektrische Ausgangsanschlüsse aufweist, wobei eine vorgebbare Zuordnung der Eingangsanschlüsse zu den Ausgangsanschlüssen vorgesehen ist und wobei wenigstens ein Eingangsanschluss als Versorgungseingang für eine Einspeisung einer Versorgungsspannung von einem vorhergehenden Funktionsmodul und wenigstens ein Ausgangsanschluss als Versorgungsausgang für eine Weiterleitung der Versorgungsspannung an ein nachfolgendes Funktionsmodul ausgebildet sind und wobei ein Zusatzeingang für eine Einspeisung einer Zusatzversorgungsspannung von einer elektrischen Energiequelle und ein Ausgangsanschluss als Zusatzausgang für eine Weiterleitung der Zusatzversorgungsspannung an wenigstens ein längs der Aufreihungsachse nachfolgend angeordnetes Funktionsmodul vorgesehen ist.

Aus der EP 2 620 820 A2 ist eine Modulanordnung mit einer Anzahl von in einer Reihe angeordneten Reihenmodulen bekannt, die wenigstens teilweise als Ausgangsmodule zum Ansteuern von Aktoren in der Automatisierungstechnik ausgebildet sind, wobei zumindest ein Reihenmodul als Sicherheitsmodul ausgebildet ist, das mit wenigstens einem zugeordneten Ausgangsmodul ein sicheres Segment bildet und das eine Anzahl schaltbarer Ausgänge zur Ansteuerung einer Anzahl zugeordneter Ausgangsmodule und wenigstens eine erste Sicherheitsschaltvorrichtung umfasst, wobei die Sicherheitsschaltvorrichtung dazu ausgebildet ist, auf Ansprechen eines sicheren Steuersignals wenigstens einen zugeordneten schaltbaren Ausgang abzuschalten. Die DE 10 2005 028 735 A1 beschreibt eine Überwachungseinrichtung mit Systemmodulen (Feldbus-Kopplermodule, Versorgungsmodule, Eingabe-/Ausgabemodule), die angrenzend aneinander angeordnet sind und Anschlusskontakte haben, um einen Systembus und/oder einen Spannungsversorgungsanschluss von einem Systemmodul an das nachfolgende Systemmodul zu leiten, wobei ein Brückenmodul gegenüberliegend von einem Feldbuskoppler zur Ankopplung des Systembusses an einen Feldbus und/oder gegenüberliegend von einem Spannungsversorgungsmodul zur Einspeisung einer Versorgungsspannung für die angeschlossenen Systemmodule ist ein zur redundanten Spannungsversorgung der an das Brückenmodul angrenzenden Systemmodule und/oder zur Bereitstellung des Systembusses für die an das Brückenmodul angrenzenden Systemmodule vorgesehen, wenn ein Systemmodul aus der Folge von Systemmodulen entfernt wird.

Aus der DE 100 61 686 A1 ist ein verteiltes Automatisierungssystem bekannt, das in der Lage ist, mehrere Ablaufzonen zu steuern und das zum Speisen und Steuern einer Zone ein Hauptmodul und eine Bedienungsstation enthält, wobei mehrere Funktionsmodule mit Maschinenelementen verbunden sind und an das Hauptmodul über eine Starkstromverbindung und einen Durchführungskanal angekoppelt sind, wobei der Durchführungskanal eine Speisungsverbindung zu mehreren speziellen Leitern umfasst, um mehrere abgesicherte Spannungen zu liefern, und eine spezielle Sicherheitsverbindung umfasst, um Signale wie eine Notabschaltung oder eine Zugriffssicherung zu den Maschinenelementen zu erfassen.

Die DE 10 2014 008 796 B3 offenbart eine Vorrichtung zur Programmierung eines Steuergerätes, wobei mittels einer Logik bekannte Kontaktbelegungen durchgeschaltet werden und jeweils eine Bestimmung des elektrischen Widerstandes zwischen Kontakten der Steckverbindung der bekannten Kontaktbelegungen erfolgt, wobei in Abhängigkeit der Bestimmung des elektrischen Widerstandes zwischen Kontakten bestimmt wird, welche der bekannten Kontaktbelegung vorliegt, wobei mit dieser nun bekannten Kontaktbelegung eine Programmierung des Steuergerätes erfolgt.

Die Aufgabe der Erfindung besteht darin, ein Reihenmodul bereitzustellen, das eine Versorgung mehrerer Reihenmodule mit wenigstens zwei individuellen Spannungsniveaus ermöglicht.

Diese Aufgabe wird für ein Reihenmodul der eingangs genannten Art mit den Merkmalen des Anspruchs 1 gelöst. Hierbei ist vorgesehen, dass die Verbindungsleitungen zwischen den beiden Reihenschnittstellen zumindest teilweise Z-verkettet angeordnet sind und dass wenigstens ein Verbindungsleitungspaar Z-verkettet ist. Unter einer Z-Verkettung wird hierbei verstanden, dass eine Verbindungsleitung, die beispielhaft mit einem ersten Anschlusskontakt innerhalb einer Reihe von Anschlusskontakten der ersten Reihenschnittstelle, die in einer vorgebbaren Teilung angeordnet sind, mit einem zweiten Anschlusskontakt innerhalb einer Reihe von Anschlusskontakten der zweiten Reihenschnittstelle, die ebenfalls in einer vorgebbaren Teilung, insbesondere mit einer zur ersten Reihenschnittstelle identischen Teilung, angeordnet sind, verbunden ist. Eine solche Z-Verkettung ermöglicht dadurch bei einer Aufreihung mehrerer Reihenmodule längs einer Aufreihungsachse eine Festlegung von mehreren Gruppen von Reihenmodulen, die jeweils über eine der Verbindungsleitungen angesprochen, insbesondere mit elektrischer Energie versorgt oder von elektrischer Energie getrennt werden können. Hierbei kann insbesondere vorgesehen sein, dass innerhalb einer Gruppe von Reihenmodulen jeweils nur das erste längs der Aufreihungsachse angeordnete Reihenmodul die Z-Verkettung für die Verbindungsleitungen aufweist, während nachfolgend angeordnete Reihenmodule innerhalb dieser Gruppe keine Z-Verkettung der Verbindungsleitungen aufweisen. Im Unterschied zu geradlinig durch die Reihenmodule geführte Verbindungsleitungen ermöglicht die Z-Verkettung somit die Verwendung von gleichartig ausgebildeten Reihenmodulen, wodurch eine Vielfalt von Reihenmodule begrenzt werden kann, was sich vorteilhaft auf Lagerhaltung und Produktionskosten für derartige Reihenmodule und daraus gebildete Steuerungsanordnungen auswirkt. Bezüglich der Buskommunikationsleitung, die sich zwischen der ersten Busschnittstelle und der zweiten Busschnittstelle, insbesondere innerhalb eines Modulgehäuses, erstreckt, ist hingegen keine Z-Verkettung vorgesehen. Vielmehr erstreckt sich die Buskommunikationsleitung vorzugsweise durch sämtliche längs der Aufreihungsachse angeordneten Reihenmodule parallel und geradlinig zur Aufreihungsachse. Bei der Buskommunikationsleitung kann es sich um eine Einzelleitung oder um einen Leitungsverbund handeln. Die Gestaltung der Buskommunikationsleitung ist von der Art des Bussystems, das über die Buskommunikationsleitung übertragen werden soll, abhängig. Ferner kann die Buskommunikationsleitung in geschirmter oder ungeschirmter Bauweise ausgebildet sein, dies ist ebenfalls von der Art des Bussystems abhängig. Darüber hinaus kann vorgesehen sein, dass die Busschnittstelle jeweils integraler Bestandteil der Reihenschnittstelle ist, alternativ kann eine diskrete Ausgestaltung der Busschnittstelle an einem Modulgehäuse vorgesehen sein, das gegebenenfalls vorgesehen ist und an dessen Außenflächen die Busschnittstellen und Reihenschnittstellen angeordnet sein können. Eine Verbindungsleitung kann zur Bereitstellung eines elektrischen Potentials an einen elektrischen Verbraucher vorgesehen sein und kann als Versorgungsleitung bezeichnet werden. Eine Verbindungsleitung kann alternativ zur Bereitstellung eines elektrischen Signals an den elektrischen Verbraucher vorgesehen sein und kann als Signalleitung bezeichnet werden. Mehrere Verbindungsleitungen können wahlweise nur Versorgungsleitungen oder nur Signalleitungen oder eine Kombination beider Leitungstypen umfassen.

Zweckmäßig ist es, wenn zwei der Verbindungsleitungen jeweils ein Anschlusskontakt zugeordnet ist, um eine Verbraucherschnittstelle zu bilden, die zum Anschluss eines elektrischen Verbrauchers ausgebildet ist. Dabei kann der elektrische Verbraucher beispielhaft in ein Modulgehäuse des Reihenmoduls integriert sein, wobei in diesem Fall entweder eine steckbare Ankopplung des elektrischen Verbrauchers an die Verbraucherschnittstelle oder eine stoffschlüssige Ankopplung des Verbrauchers, insbesondere durch Löten, mit der Verbraucherschnittstelle vorgesehen sein kann. Alternativ können die Anschlusskontakte, die den Verbindungsleitungen zugeordnet sind, an eine Außenoberfläche eines Modulgehäuses des Reihenmoduls geführt sein und dort eine elektrische oder elektromechanische Ankopplung des Verbrauchers ermöglichen. Alternativ ist vorgesehen, dass mehrere Reihenmodule mit oder ohne zugeordnete Verbraucher in einem gemeinsamen Modulgehäuse aufgenommen sind. Bei dem elektrischen Verbraucher kann es sich insbesondere um ein elektromechanisches Ventil, vorzugsweise um ein Magnetventil oder ein Piezoventil, oder um einen elektromechanischen Aktor, insbesondere einen Magnetsteller oder einen Elektromotor, handeln. Hierbei ist vorgesehen, dass der elektrische Verbraucher dann in Betrieb genommen wird, wenn zwischen den beiden Verbindungsleitungen eine ausreichende elektrische Potenzialdifferenz vorliegt, die so lang zur Verfügung gestellt wird, wie der elektrische Verbraucher betrieben werden soll und deren Abschaltung zwangsläufig zur Abschaltung des elektrischen Verbrauchers führt. Bei einer Weiterbildung der Erfindung ist vorgesehen, dass der Buskommunikationsleitung sowie zwei der Verbindungsleitungen jeweils wenigstens ein Anschlusskontakt zugeordnet ist, um eine Verbraucherschnittstelle zu bilden, die zum Anschluss eines elektrischen Verbrauchers ausgebildet ist. In diesem Fall wird davon ausgegangen, dass in einem normalen Betriebszustand des Reihenmoduls, das in einer entsprechenden modular ausgebildeten Steuerungsanordnung integriert werden kann, die beiden Verbindungsleitungen permanent mit elektrischen Potenzialen versorgt sind und dass der elektrische Verbraucher eine Buskommunikationsschaltung umfasst, die dazu ausgebildet ist, Buskommunikationssignale auszuwerten, die über die Buskommunikationsleitung übertragen werden. Die Buskommunikationsleitung kann mehrere Adern umfassen, in diesem Fall sind vorzugsweise auch mehrere Anschlusskontakte vorgesehen. Aus den ausgewerteten Buskommunikationssignalen erzeugt die Buskommunikationsschaltung geeignete Ansteuersignale für eine dem elektrischen Verbraucher zugeordnete Leistungsstufe, sodass diese Leistungsstufe wahlweise die an den Verbindungsleitungen bereitgestellten elektrischen Potenziale zum Betrieb des elektrischen Verbrauchers einsetzen kann oder diese elektrische Potenziale blockiert, um einen Betrieb des elektrischen Verbrauchers zu verhindern. Ein derartiger elektrischer Verbraucher kann beispielsweise als elektromechanisches Ventil oder elektromechanischer Antrieb ausgebildet sein.

Vorteilhaft ist es, wenn an der Buskommunikationsleitung eine Buskommunikationsschaltung angeschlossen ist, die zur Verbindung der Buskommunikationsleitung mit mehreren Signalleitungen ausgebildet ist, und dass die Signalleitungen, insbesondere ausschließlich, mit einer der beiden Reihenschnittstellen verbunden sind. Bei den Signalleitungen handelt es sich um elektrische Leitungen, die wahlweise für eine eigenständige Versorgung von angeschlossenen elektrischen Verbrauchern oder in Kombination mit Verbindungsleitungen für eine elektrische Versorgung von elektrischen Verbrauchern vorgesehen sein können. Vorzugsweise werden die Signalleitungen zur Ansteuerung von elektrischen Verbrauchern eingesetzt, die keine eigene Buskommunikationsschaltung aufweisen, wie dies beispielsweise bei einfach aufgebauten elektrischen Verbrauchern wie Magnetventilen oder Piezoventilen der Fall ist. Hierdurch kann bei einer Anreihung einer Vielzahl von Reihenmodulen eine Vielzahl von einfach aufgebauten elektrischen Verbrauchern in unabhängiger Weise angesteuert werden. Insbesondere ermöglicht die Bereitstellung von elektrischer Energie an die mehreren Signalleitungen mit Hilfe der zugeordneten Buskommunikationsschaltung eine vorteilhafte Versorgung von nachfolgend angeordneten Reihenmodulen, die ihrerseits jeweils für den Anschluss der einfach aufgebauten elektrischen Verbraucher ausgebildet sind.

Vorteilhaft ist es, wenn die Buskommunikationsschaltung mit zwei der Verbindungsleitungen verbunden ist, um eine elektrische Versorgung der Buskommunikationsschaltung zu gewährleisten. In diesem Fall ist die Buskommunikationsschaltung, die seinerseits für eine Ansteuerung eines oder mehrerer, insbesondere einfach aufgebauter, elektrischer Verbraucher vorgesehen ist, innerhalb einer vorgebbaren Zone der modular ausgebildeten Steuerungsanordnung gezielt mit elektrischer Energie versorgbar oder von dieser abtrennbar, wodurch insbesondere sicherheitsgerichtete Funktionen innerhalb der modular ausgebildeten Steuerungsanordnung verwirklicht werden können.

Erfindungsgemäß ist vorgesehen, dass die Verbindungsleitungen mehrere Verbindungsleitungspaare bilden, die jeweils eine, insbesondere Z-verkettete, Masseleitung und eine, insbesondere Z-verkettete, Versorgungsleitung umfassen. Dies ermöglicht eine Bereitstellung von individuellen Spannungsniveaus an die mit dem jeweiligen Verbindungsleitungspaar verbundenen Gruppen von Reihenmodulen und die zugeordneten elektrischen Verbraucher. Dies kann einerseits im Hinblick auf sicherheitsgerichtete Anwendungen von Interesse sein, da die Verbindungsleitungspaare die zugeordneten Reihenmodule unabhängig voneinander mit elektrischer Energie versorgen können oder eine Abschaltung der jeweiligen elektrischen Energieversorgung für die jeweilige Gruppe von Reihenmodulen vorgenommen werden kann, ohne andere elektrische Verbraucher zu beeinflussen, die an Reihenmodule angekoppelt sind, die an anderen Verbindungsleitungspaaren angeschlossen sind. Darüber hinaus wird hierdurch für die jeweilige Gruppe von Reihenmodulen eine zweikanalige Abschaltung der angeschlossenen elektrischen Verbraucher ermöglicht, da sowohl Einfluss auf die Versorgungsleitung als auch die Masseleitung genommen werden kann, ohne hierdurch andere Gruppen von Reihenmodulen zu beeinflussen. Hierdurch kann ein höheres Sicherheitsniveau innerhalb einer vorgebbaren Sicherheitskategorie für die jeweiligen Reihenmodule erzielt werden.

Das erfindungsgemäße Reihenmodul kann zusammen mit einem Verbindungsmodul verwendet werden. Hierbei umfasst das Verbindungsmodul eine Buskommunikationsschnittstelle, die zur Verbindung mit einer übergeordneten Steuerung ausgebildet ist, eine Versorgungsschnittstelle, die zur Verbindung mit einer elektrischen Quelle ausgebildet ist, eine Kombinationsschnittstelle, die eine Busschnittstelle und eine Reihenschnittstelle umfasst und die zur Verbindung mit einem Reihenmodul ausgebildet ist, wobei zwischen der Buskommunikationsschnittstelle und der Busschnittstelle eine Buskommunikationsleitung ausgebildet ist, und wobei zwischen der Versorgungsschnittstelle und der Reihenschnittstelle wenigstens zwei Versorgungsleitungspaare derart ausgebildet sind, dass sie jeweils eine Masseleitung und eine Spannungsversorgungsleitung umfassen und damit eine Bereitstellung von wenigstens zwei voneinander unabhängigen elektrischen Spannungen ermöglichen, um wenigstens zwei voneinander unabhängige Versorgungspfade für Reihenmodule zu bilden. Ein derartiges Verbindungsmodul ist für eine Verbindung mit mehreren Reihenmodulen vorgesehen und dient zur Einkopplung sowie zur Bereitstellung von Buskommunikationssignalen, elektrischen Versorgungsspannungen und gegebenenfalls von analogen Signalen, wie sie insbesondere für einfach aufgebaute elektrische Verbraucher, die den Reihenmodulen zugeordnet sind, verwendet werden. Die Buskommunikationsschnittstelle des Verbindungsmoduls ist vorzugsweise identisch zu der Busschnittstelle ausgebildet, wie sie an der Kombinationsschnittstelle des Verbindungsmoduls ausgebildet ist und wie sie in gleicher Weise auch an den Reihenmodulen vorgesehen ist. In diesem Fall wird davon ausgegangen, dass ein Buskommunikationssignal ohne eine Wandlung des Kommunikationsprotokolls durch das Verbindungsmodul hindurchgeschleift ist und gegebenenfalls im Verbindungsmodul Informationen aus dem Buskommunikationssignal ausgelesen oder in das Buskommunikationssignal eingetragen werden. Alternativ kann vorgesehen sein, dass das Verbindungsmodul in der Art eines Busknotens ausgebildet ist, bei dem ein Buskommunikationssignal, das an der Buskommunikationsschnittstelle bereitgestellt wird, im Verbindungsmodul eine Wandlung von einem ersten Buskommunikationsprotokoll in ein zweites Buskommunikationsprotokoll erfährt, das dann anschließend an der Busschnittstelle der Kombinationsschnittstelle bereitgestellt wird. Auch in diesem Fall kann zudem vorgesehen sein, dass im Verbindungsmodul ein Auslesen des Buskommunikationssignals für interne Zwecke und/oder ein Einschreiben von Informationen in das Buskommunikationssignal ausgehend von Informationen aus dem Verbindungsmodul stattfindet. Die dem Verbindungsmodul zugeordnete Versorgungsschnittstelle ermöglicht die Einspeisung von elektrischer Energie in das Verbindungsmodul, wobei diese elektrische Energie in vorgebbarer Weise an die wenigstens zwei Versorgungsleitungspaare des Verbindungsmoduls weitergeleitet wird. Wahlweise ist die Versorgungsschnittstelle zur Verbindung mit genau einer elektrischen Quelle oder mit einer Mehrzahl von elektrischen Quellen ausgebildet, dies ist insbesondere von dem Sicherheitsniveau abhängig, das mit dem Verbindungsmodul innerhalb einer vorgebbaren Sicherheitskategorie eingehalten werden soll. Ferner hängt die Ausgestaltung der Versorgungsschnittstelle davon ab, welche elektrischen Verbraucher an den zugeordneten Reihenmodulen angeschlossen werden sollen. Die am Verbindungsmodul ausgebildete Kombinationsschnittstelle ist zur Ankopplung eines Reihenmoduls vorgesehen und umfasst dementsprechend sowohl eine Busschnittstelle als auch eine Reihenschnittstelle, die baulich getrennt oder zusammengefasst ausgebildet sein können. Die an der Reihenschnittstelle der Kombinationsschnittstelle des Verbindungsmoduls bereitgestellten wenigstens zwei Versorgungsleitungspaare ermöglichen die Bereitstellung von wenigstens zwei voneinander unabhängigen elektrischen Spannungen zwischen der jeweiligen Masseleitung und der jeweiligen Spannungsversorgungsleitung, mit denen somit innerhalb der nachgelagert angereihten Reihenmodule wenigstens zwei unterschiedliche Versorgungsspannungsgruppen ausgebildet werden können, die gegebenenfalls getrennt voneinander bereitgestellt und abgeschaltet werden können.

Beispielhaft ist für das Verbindungsmodul vorgesehen, dass wenigstens einer, insbesondere jeder, Versorgungsleitung wenigstens eine Schalteinrichtung zur Unterbrechung der elektrischen Verbindung zwischen der Versorgungsschnittstelle und der Reihenschnittstelle zugeordnet ist. Mit der Schalteinrichtung kann, insbesondere in Abhängigkeit von einem Buskommunikationssignal, das über die Buskommunikationsleitung im Verbindungsmodul übertragen wird, eine gezielte Abschaltung wenigstens einer, vorzugsweise mehrerer, Versorgungsleitungen innerhalb des Verbindungsmoduls vorgenommen werden, um dadurch eine Einflussnahme auf eine Energieversorgung von Gruppen von Reihenmodulen, die an das Verbindungsmodul angereiht sind, vornehmen zu können. Dies ist insbesondere dann von Interesse, wenn das Verbindungsmodul in einer modular ausgebildeten Steuerungsanordnung eingesetzt wird, die zur Ansteuerung einer komplexen Maschine oder Vorrichtung mit unterschiedlichen Maschinen- oder Vorrichtungsgruppen eingesetzt wird. Hierbei kann vorgesehen sein, im Fall einer sicherheitsgerichteten Einflussnahme auf die Maschine oder Vorrichtung nur Teile der Maschine oder Vorrichtung stillzusetzen, während andere Teile der Vorrichtung ihren Betrieb aufrecht halten sollen. Vorzugsweise ist vorgesehen, dass jeder der Versorgungsleitungen einer Schalteinrichtung zugeordnet ist, um eine vollständige Einflussnahme auf sämtliche an das Verbindungsmodul nachgelagert angereihten Reihenmodule vornehmen zu können. Ferner ist vorgesehen, dass die Schalteinrichtungen ein vorgebbares Sicherheitsniveau innerhalb einer vorgebbaren Sicherheitskategorie erfüllen, insbesondere durch ihre Aufbauweise oder eine redundante Anordnung von Schalteinrichtungen eine sichere Abschaltung von Versorgungsspannungen ermöglichen.

Ferner kann vorgesehen sein, , dass an der Buskommunikationsleitung eine Buskommunikationsschaltung angeschlossen ist, der zur Verbindung der Buskommunikationsleitung mit mehreren Signalleitungen ausgebildet ist, und dass die Signalleitungen mit der Reihenschnittstelle verbunden sind.

Das Verbindungsmodul kann derart ausgebildet sein, dass wenigstens zwei der Verbindungsleitungspaare jeweils ein separat ausgebildeter Versorgungsanschluss für eine externe Zuführung einer Versorgungsspannung zugeordnet ist. Hierdurch können unterschiedliche Gruppen von Reihenmodulen, die an das Verbindungmodul angereiht sind, mit unterschiedlichen und voneinander unabhängigen elektrischen Spannungen versorgt werden. Eine Zuführung dieser elektrischen Versorgungsspannungen kann insbesondere über diskret ausgebildete Versorgungsspannungsschnittstellen erfolgen.

Das Reihenmodul kann in einer modular ausgebildeten Steuerungsanordnung eingesetzt werden. Diese modular ausgebildete Steuerungsanordnung ist zur Ansteuerung mehrerer elektrischer Verbraucher vorgesehen und umfasst ein Verbindungsmodul sowie mehrere an das Verbindungsmodul angereihte Reihenmodule sowie jeweils den Reihenmodulen zugeordnete elektrische Verbraucher aus der Gruppe: Schaltventil, Ventil mit integriertem Sensor, Proportionalventil, elektromechanischer Aktor.

Eine vorteilhafte Ausführungsform der Erfindung ist in der Zeichnung dargestellt. Hierbei zeigt:
- Figur 1: eine schematische Darstellung einer modular ausgebildeten Steuerungsanordnung mit einem nicht zur Erfindung gehörenden Verbindungsmodul, mehreren Reihenmodulen sowie elektrischen Verbrauchern, und
- Figur 2: eine schematische Darstellung einer zweiten Ausführungsform eines nicht zur Erfindung gehörenden Verbindungsmoduls.

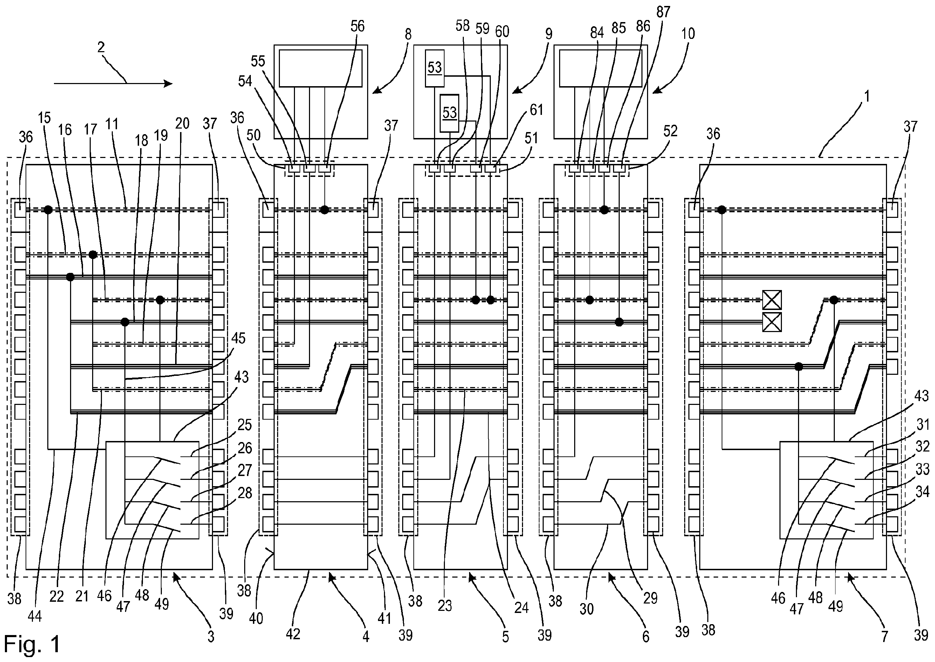

Eine in der Figur 1 dargestellte Steuerungsanordnung 1, die Bestandteil eines nicht näher dargestellten Automatisierungssystems sein kann, das beispielsweise zum Betrieb einer komplexen technischen Anlage unter Verwendung einer Vielzahl von elektrisch oder pneumatisch betreibbaren Aktoren vorgesehen ist, umfasst mehrere längs einer Aufreihungsachse 2 aufgereihte Module. Bei den Modulen handelt es sich um ein Verbindungsmodul 3 sowie um mehrere Reihenmodule 4, 5, 6, 7. Mit den Reihenmodulen 4, 5 und 6 sind jeweils elektrische Verbraucher 8, 9 und 10 verbunden. Beispielhaft ist der elektrische Verbraucher 8 als Proportionalventil ausgebildet, der elektrische Verbraucher 10 ist als Ventil mit integriertem Sensor ausgebildet und der elektrische Verbraucher 9 umfasst zwei Schaltventile 53. Aus Gründen der Übersichtlichkeit wird auf eine Darstellung von Fluidleitungen, die mit den jeweiligen Ventilen verbunden sind, verzichtet.

Rein exemplarisch umfassen das Verbindungsmodul 3 sowie die Reihenmodule 4, 5, 6, 7 elektrische Leitungen, die nachstehend näher beschrieben werden. Es kann jedoch auch zudem vorgesehen sein, dass das Verbindungsmodul sowie die Reihenmodule bei einer nicht näher dargestellten Variante auch fluidische Leitungen, insbesondere eine Versorgungsleitung und eine Abluftleitung umfassen.

Die in dem Verbindungsmodul 3 sowie den Reihenmodulen 4, 5, 6, 7 vorgesehen elektrischen Leitungen können in drei unterschiedlichen Gruppen eingeteilt werden. Die erste Leitungsgruppe wird durch die Buskommunikationsleitung 11 gebildet, die sich durch das Verbindungsmodul 3 sowie durch sämtliche der Reihenmodule 4, 5, 6, 7 parallel zur Aufreihungsachse 2 erstreckt und das Verbindungsmodul 3 sowie sämtliche der Reihenmodule 4, 5, 6, 7 miteinander verbindet. Rein exemplarisch ist vorgesehen, dass die Buskommunikationsleitung 11 durch jedes der Reihenmodule 4, 5, 6, 7 in ununterbrochener Weise durchgeschleift ist. Bei einer nicht näher dargestellten Ausführungsform kann vorgesehen sein, dass die Buskommunikationsleitung, die eine oder mehrere Leiter umfassen kann, wenigstens in einem Reihenmodul an eine Verbraucherschnittstelle geführt ist und durch den Verbraucher geschleift ist, dies wird auch als Daisy-Chain-Anordnung bezeichnet.

Ferner umfassen das Verbindungsmodul 3 sowie die Reihenmodule 4, 5, 6, 7 jeweils mehrere Verbindungsleitungen, die entweder einer zweiten Gruppe von Leitungen, nämlich den Versorgungsleitungen, oder einer dritten Gruppe von Leitungen, nämlich den Signalleitungen, zugehörig sind.

Beispielhaft ist vorgesehen, dass die Versorgungsleitungen jeweils paarweise angeordnet sind und insbesondere eine spannungsführende Leitung und eine Masseleitung umfassen. Zur Verdeutlichung des Verlaufs der Versorgungsleitungen werden nachstehend für das Verbindungsmodul 3 sowie für alle Reihenmodule 4, 5, 6, 7 jeweils die gleichen Bezugszeichen für diejenigen Versorgungsleitungen benutzt, die in elektrischer Weise miteinander verknüpft sind. Hierdurch ergibt sich anhand des Verlaufs der Versorgungsleitungen durch das Verbindungsmodul 3 sowie die Reihenmodule 4, 5, 6, 7, dass rein exemplarisch Versorgungsleitungen 15, 16, 17, 18, 19, 20, 21, 22, 23, 24 vorgesehen sind.

Ferner gilt im Hinblick auf die der dritten Gruppe von Leitungen zugehörigen Signalleitungen, dass hier Signalleitungen 25, 26, 27, 28, 29, 30, 31, 32, 33, 34 vorliegen.

Das Verbindungsmodul 3 umfasst eine erste Busschnittstelle 36, eine zweite Busschnittstelle 37, eine erste Reihenschnittstelle 38 sowie eine zweite Reihenschnittstelle 39. Die erste Busschnittstelle 36 kann auch als Buskommunikationsschnittstelle bezeichnet werden, da sie zur Verbindung mit einer nicht dargestellten übergeordneten Steuerung ausgebildet ist. Die erste Reihenschnittstelle 38 kann auch als Versorgungsschnittstelle bezeichnet werden, da sie zur Verbindung mit einer nicht dargestellten elektrischen Quelle ausgebildet ist. Die zweite Busschnittstelle 37 und die zweite Reihenschnittstelle 39 können auch als Kombinationsschnittstelle bezeichnet werden. Die Busschnittstellen 36, 37 sowie die Reihenschnittstellen 38, 39 sind beim Verbindungsmodul 3 sowie bei den Reihenmodulen 4, 5, 6, 7 an einander entgegengesetzten Stirnflächen 40, 41 eines Modulgehäuses 42 angebracht.

Rein exemplarisch ist vorgesehen, dass das Verbindungsmodul 3 und die Reihenmodule 4, 5, 6, 7 jeweils zumindest in elektromechanischer Hinsicht gleiche Schnittstellen aufweisen. Bei einer nicht näher dargestellten Variante des Verbindungsmoduls kann dieses eingangsseitig auch eine andere elektromechanische Schnittstellenkonfiguration aufweisen.

Beim Verbindungsmodul 3 dient die erste Busschnittstelle 36 zur Verbindung mit einem vorgelagerten Busteilnehmer, bei dem es sich wahlweise um einen Busknoten oder um eine übergeordnete Steuerung, insbesondere eine speicherprogrammierbare Steuerung (SPS) handeln kann. In jedem Fall wird von der übergeordneten Steuerung oder dem Busknoten ein Buskommunikationssignal an der ersten Busschnittstelle 36 bereitgestellt, das längs der Aufreihungsachse 2 durch sämtliche der Reihenmodule 3, 4, 5, 6, 7 weitergeleitet wird. Hierbei kann vorgesehen sein, dass die Reihenmodule 3, 4, 5, 6, 7 in individueller Weise auf das über die Buskommunikationsleitung 11 übertragene Buskommunikationssignal zugreifen und diesbezügliche Lese- und/oder Schreibvorgänge vornehmen, um beispielsweise Parameter oder Befehle für den eigenen Betrieb aus dem Buskommunikationssignal zu entnehmen oder Informationen für weitere Busteilnehmer, insbesondere übergeordnete Steuerungseinrichtung, an das Buskommunikationssignal weiterzugeben.

Die ersten und zweiten Busschnittstellen 36, 37 sämtlicher Reihenmodule 3, 4, 5, 6, 7 sind exemplarisch gleich ausgebildet, sodass keine unterschiedlichen Verbindungsmittel, beispielsweise unterschiedliche Steckverbinder, eingesetzt werden müssen.

Die an den Reihenmodulen 4, 5, 6, 7 vorgesehenen Reihenschnittstellen 38 und 39 sind ebenfalls in elektromechanischer Hinsicht jeweils kompatibel zueinander ausgebildet, wobei sich die Belegung von Anschlusskontakten an den einzelnen Reihenschnittstellen 38 und 39, die dem jeweiligen Reihenmodulen zugeordnet sind, unterscheiden kann.

Beim Verbindungsmodul 3 ist exemplarisch vorgesehen, dass die Reihenschnittstelle 38 rein exemplarisch nur zwei mit zugehörigen Versorgungsleitungen 15, 16 verbundene, nicht näher dargestellte, Anschlusskontakte aufweist, womit eine Einspeisung von elektrischer Energie in das Verbindungsmodul 3 vorgenommen werden kann. Die übrigen, nicht näher dargestellten Steckplätze in der Reihenschnittstelle 38 des Verbindungsmoduls 3 sind hingegen nicht verbunden. Hingegen sind bei der Reihenschnittstelle 39 des Verbindungsmoduls 3, die dem nachfolgenden Reihenmodul 4 zugewandt ist, sämtliche nicht näher dargestellte Anschlusskontakte mit zugeordneten Versorgungsleitungen 15 bis 22 sowie Signalleitungen 25 bis 28 verbunden. Somit können die dort anliegenden elektrischen Potenziale oder Signale an nachgelagert längs der Aufreihungsachse 2 angeordnete Reihenmodule 4 bis 7 weitergeleitet werden. Beispielhaft ist beim Verbindungsmodul 3 vorgesehen, dass die Versorgungsleitung 15 mit den Versorgungsleitungen 17, 19 und 21 verbunden ist. Ferner ist die Versorgungsleitung 16 mit den weiteren Versorgungsleitungen 18, 20 und 22 verbunden. Damit können die jeweils an den Versorgungsleitungen 15 und 16 bereitgestellten elektrischen Potenziale an die jeweils zugeordneten Versorgungsleitungen 17, 18, 19, 20, 21, 22 bereitgestellt werden.

Ferner ist im Verbindungsmodul 3 eine Buskommunikationsschaltung 43 vorgesehen, bei der es sich insbesondere um einen Mikroprozessor oder Mikrocontroller handelt. Die Buskommunikationsschaltung 43 ist über eine Kommunikationsleitung 44 mit der Buskommunikationsleitung 11 verbunden und ist ferner über eine Koppelleitung 45 rein exemplarisch mit der Versorgungsleitung 18 verbunden. In der Buskommunikationsschaltung 43 sind mehrere Schalter 46 bis 49 ausgebildet. Diese Schalter 46 bis 49 können jeweils in individueller Weise gemäß einem in der Buskommunikationsschaltung gespeicherten Programm in Abhängigkeit von einem über die Kommunikationsleitung 44 bereitgestellten Buskommunikationssignal in ihrem Schaltzustand verändert werden. Dadurch können elektrische Verbindungen zwischen der Koppelleitung 45 und der jeweils zugeordneten Signalleitung 25, 26, 27, 28 wahlweise herstellt bzw. unterbrochen werden. Dabei werden die Signalleitungen 25, 26, 27, 28 in gleicher Weise wie die Versorgungsleitungen 15, 16, 17, 18, 19, 20, 21, 22 an der Reihenschnittstelle 39 des Verbindungsmoduls 3 bereitgestellt.

Die Versorgungsleitungen 15, 16, 17, 18, 19, 20, 21, 22 des Verbindungsmoduls 3 sind jeweils paarweise zu betrachten und dienen zur Versorgung von nachgelagert längs der Aufreihungsachse 2 angeordneten Gruppen von Reihenmodulen 4 bis 7. Beispielhaft ist vorgesehen, dass jeweils eine Versorgungsleitung 15, 17, 19, 21 eines jeweiligen Versorgungsleitungspaars als Masseleitung dient, während die andere Versorgungsleitung 16, 18, 20, 22 des Versorgungsleitungspaars spannungsführend ist. Demgegenüber sind die Signalleitungen 25, 26, 27, 28 im Verbindungsmodul 3 für eine individuelle Versorgung einzelner Verbraucher, beispielsweise der Verbraucher 9 und 10, vorgesehen.

Bei dem rein exemplarisch als erstes auf das Verbindungsmodul 3 folgenden Reihenmodul 4 ist beispielhaft vorgesehen, dass neben der Buskommunikationsleitung 11 auch sämtliche Signalleitungen 25, 26, 27, 28 unverändert zwischen der ersten Busschnittstelle 36 beziehungsweise ersten Reihenschnittstelle 38 und der zweiten Busschnittstelle 37 beziehungsweise zweiten Reihenschnittstelle 39 durch das Reihenmodul 4 geführt sind. Demgegenüber ist im Hinblick auf die Versorgungsleitungen 19 und 20 rein exemplarisch vorgesehen, dass diese ausgehend von der ersten Reihenschnittstelle 38 innerhalb des Reihenmoduls 4 zu einer Verbraucherschnittstelle 50 geführt sind und dort Anschlusskontakte 54, 55 ausbilden, die für eine Versorgung des beispielhaft als Proportionalventil ausgebildeten elektrischen Verbrauchers 8 genutzt werden können. Ferner ist an der Verbraucherschnittstelle 50 auch wenigstens ein Anschlusskontakt 56 für eine Verbindung mit der Buskommunikationsleitung 11 vorgesehen, sodass Buskommunikationssignale der Buskommunikationsleitung 11 an den elektrischen Verbraucher 8 bereitgestellt werden können. Dabei wird davon ausgegangen, dass der elektrische Verbraucher 8 eine eigene Intelligenz, insbesondere in Form eines nicht dargestellten Mikroprozessors oder Mikrocontrollers, umfasst. Diese Intelligenz ist dazu ausgebildet, eintreffende Buskommunikationssignale derart umzusetzen, dass ein Steuervorgang für das nicht näher dargestellte Proportionalventil des elektrischen Verbrauchers 8 durchgeführt werden kann. Die beiden Versorgungsleitungen 21 und 22 sind im Reihenmodul 4 als Z-Verkettung angeordnet, sie treten an der zweiten Reihenschnittstelle 39 an denjenigen Anschlussstellen aus, an denen an der ersten Reihenschnittstelle 38 des Reihenmoduls 4 die Versorgungsleitungen 19 und 20 angeschlossen sind und werden somit für das nachfolgende Reihenmodul 5 an der Stelle der Versorgungsleitungen 19 und 20 mit dessen erster Reihenschnittstelle 38 verbunden.

Das rein exemplarisch an das erste Reihenmodul 4 angereihte zweite Reihenmodul 5 unterscheidet sich vom ersten Reihenmodul 4 dadurch, dass beispielhaft sämtliche der Versorgungsleitungen, die sich zwischen der ersten Reihenschnittstelle 38 und der zweiten Reihenschnittstelle 39 erstrecken, jeweils geradlinig parallel zur Aufreihungsachse 2 durch das Reihenmodul 5 geführt sind. Da aufgrund der Anordnung des zweiten Reihenmoduls 5 nachgelagert zum ersten Reihenmodul 4 keine elektrische Verbindung zwischen dem Verbindungsmodul 3 und den beiden unteren Versorgungsleitungen der ersten Reihenschnittstelle 38 vorliegt, werden die mit der ersten Reihenschnittstelle 38 des zweiten Reihenmoduls 5 verbundenen Versorgungsleitungen mit dem Bezugszeichen 23 und 24 versehen. Bei der Verwendung des zweiten Reihenmoduls 5 in der Anordnung gemäß der Figur 1 bleiben diese beiden Versorgungsleitungen rein exemplarisch ohne Versorgungsspannung. Hingegen kann vorgesehen sein, dass diese Versorgungsleitungen 23, 24 bei einer anderen Anordnung des Reihenmoduls 5, insbesondere bei einer unmittelbaren Anreihung an das Verbindungsmodul 3, elektrische Potenziale leiten können. Bei dem zweiten Reihenmodul 5 ist ferner eine Verbraucherschnittstelle 51 mit insgesamt vier Anschlusskontakten 58, 59, 60, 61 vorgesehen, wobei die Anschlusskontakte 58 und 59 unmittelbar mit den Signalleitungen 25 und 26 verbunden sind, während die beiden anderen Anschlusskontakte 60 und 61 beispielhaft mit der Versorgungsleitung 17 verbunden sind. Im zugeordneten elektrischen Verbraucher 9 sind die rein exemplarisch vorgesehenen Schaltventile 53 jeweils zwischen die zugehörige Signalleitung 25 beziehungsweise 26 und die zugeordnete Versorgungsleitung 17 geschaltet. Dementsprechend kann bei geeigneter Ansteuerung der Buskommunikationsschaltung 43 im Verbindungsmodul 3 durch ein entsprechendes Buskommunikationssignal ein Schließen der Schalter 46 beziehungsweise 47 bewirkt und ein Stromfluss durch die jeweiligen Schaltventile 53 hervorgerufen werden, sofern zum gleichen Zeitpunkt an der Versorgungsleitung 17 ein Massepotential bereitgestellt wird. Dadurch können die beiden Schaltventile 53 ihren Schaltzustand ändern und beispielsweise einen Fluidstrom sperren oder freigeben. Da im Reihenmodul 5 die beiden Signalleitungen 25 und 26 an die zugehörige Verbraucherschnittstelle 51 abgezweigt werden, sind die weiteren Signalleitungen 27 und 28 im Reihenmodul 5 als Z-Verkettung angeordnet, sodass sie bei der zweiten Reihenschnittstelle 39 die Plätze der beiden Signalleitungen 25 und 26 an der ersten Reihenschnittstelle 38 einnehmen.

Beim dritten Reihenmodul 6 ist vorgesehen, dass der rein exemplarisch als Ventil mit nicht dargestelltem, integriertem Sensor ausgebildete elektrische Verbraucher 10 an der Verbraucherschnittstelle 52 mit den Anschlusskontakten 84, 85, 96 und 87 zum einen unmittelbar mit der Signalleitung 27 verbunden ist, zum anderen unmittelbar mit den Versorgungsleitungen 17 und 18 sowie mit der Buskommunikationsleitung 11 verbunden ist. Hierdurch kann beispielsweise erreicht werden, dass der als Ventil mit integriertem Sensor ausgebildete elektrische Verbraucher, der somit vier Anschlüsse (Spannung, Masse, Steuersignal und Bus für Rückmeldung) ausgehend von einer stromlosen/energielosen Neutralposition nur dann eine Schaltstellung einnimmt, wenn sowohl eine elektrische Versorgung über die Signalleitung 27 und die Versorgungleitungen 17 und 18 vorhanden ist. Ferner kann der Verbraucher 10 ein Sensorsignal des nicht dargestellten, integrierten Sensors, bei dem es sich beispielsweise um einen Drucksensor handeln kann, über die Buskommunikationsleitung 11 an einen geeigneten Empfänger bereitstellen Die übrigen im dritten Reihenmodul 6 vorgesehenen Signalleitungen 28, 29 und 30 sind zwischen der ersten Reihenschnittstelle 38 und der zweiten Reihenschnittstelle 39 Z-verkettet.

Exemplarisch ist somit mit dem Verbraucher 8 ein Verbraucher vorgesehen, der mit Buskommunikationssignalen beeinflusst werden kann, die über die Buskommunikationsleitung 11 bereitgestellt werden und der über die Versorgungsleitungen 19 und 20 versorgt wird.

Ferner ist beispielhaft mit dem Verbraucher 9 ein Verbraucher vorgesehen, dessen Schaltventile 53 jeweils mit einer der Steuerleitungen 25, 26 und mit der Versorgungsleitung 17 verbunden sind und auf diesem Wege aktiviert und deaktiviert werden kann.

Mit dem Verbraucher 10 wird exemplarisch ein Verbraucher gezeigt, der über die Versorgungleitungen 17 und 18 versorgt wird und ein Schaltsignal über die Steuerleitung 27 empfangen und ferner über die Buskommunikationsleitung 11 ein Sensorsignal an einen geeigneten Empfänger bereitstellen kann.

Das vierte Reihenmodul 7 ist beispielhaft als Variante des Verbindungsmoduls 3 ausgebildet und für die Anreihung an ein vorausgegangenes Reihenmodul, beispielsweise aus der Gruppe der Reihenmodule 4, 5, 6, vorgesehen. Das Reihenmodul 7 weist rein exemplarisch keinen zugeordneten Verbraucher auf, sondern ist vielmehr dazu vorgesehen, die Buskommunikationsleitung 11 sowie zumindest Teile der Versorgungsleitungen 15, 16, 21, 22, 23, 24 an wenigstens ein weiteres, nicht dargestelltes, nachgelagert längs der Aufreihungsachse 2 angeordnetes Reihenmodul weiterzuleiten. Ferner ist das vierte Reihenmodul 7 dazu ausgebildet, unter Verwendung von Buskommunikationssignalen von der Buskommunikationsleitung 11, die über die Kommunikationsleitung 44 an die Buskommunikationsschaltung 43 bereitgestellt werden, sowie unter Verwendung eines an der Versorgungsleitung 22 anliegenden Massepotentials an Signalleitungen 31 bis 34 neue Signale in Abhängigkeit von der Schalterstellungen der Schalter 46 bis 49 bereitzustellen.

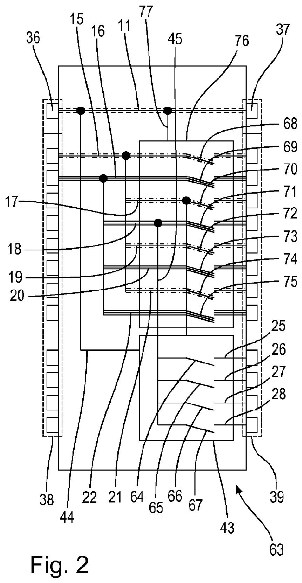

Bei einer in der Figur 2 dargestellten Variante eines Verbindungsmoduls 63 werden für funktionsgleiche Komponenten die gleichen Bezugszeichen wie beim Verbindungsmodul 3 verwendet. Das Verbindungsmodul 63 unterscheidet sich vom Verbindungsmodul 3 dadurch, dass sowohl den Signalleitungen 25, 26, 27, 28 als auch den Versorgungsleitungen 15, 16, 17, 18, 19, 20, 21, 22 jeweils Schalter 46, 47, 48, 49, 68, 69, 70, 71, 72, 73, 74, 75 zugeordnet sind. Dabei sind die Schalter 46, 47, 48, 49 der bereits aus der Figur 1 bekannten Buskommunikationsschaltung 43 zugehörig und ermöglichen die gezielte, beispielhaft nicht sicherheitsgerichtete, Beeinflussung der Signalleitungen 25, 26, 27 und 28. Ferner umfasst das Verbindungsmodul eine weitere Buskommunikationsschaltung 76 mit zugeordneten Schaltern 68, 69, 70, 71, 72, 73, 74, 75, die eine gezielte, insbesondere jeweils paarweise, beispielhaft sicherheitsgerichtete Abschaltung der Versorgungsleitungen 15 bis 22 beziehungsweise der Versorgungsleitungspaare 15 und 16; 17 und 18; 19 und 20; 21 und 22 ermöglichen.

Beispielsweise kann die Buskommunikationsschaltung 76 so konfiguriert sein, dass die Versorgungsleitungspaare 15 und 16; 17 und 18; 19 und 20; 21 und 22 in Abhängigkeit von einem, insbesondere sicherheitsgerichteten, Buskommunikationssignal, das über die Buskommunikationsleitung 11 sowie die zugeordnete Kommunikationsleitung 77 an der Buskommunikationsschaltung 76 bereitgestellt wird, wahlweise und unabhängig von anderen Versorgungsleitungspaaren zwischen einem elektrisch leitenden Zustand und einem elektrisch nichtleitenden Zustand umgeschaltet werden können.

Durch diese Maßnahmen können Versorgungsspannungen für die nachgelagert an das Verbindungsmodul 63 anbringbaren, in der Figur 2 nicht dargestellten Reihenmodule 4, 5, 6, 7, die in der Praxis in zumindest nahezu beliebiger anderer Anordnung und mit anderen Konfigurationen im Hinblick auf die zugeordneten Verbraucher ausgebildet sein können, in, insbesondere sicherheitsgerichtet abschaltbare, Versorgungsspannungszonen gruppiert werden, die selektiv durch die Buskommunikationsschaltung 76 abgeschaltet werden können.

Dementsprechend können sicherheitsgerichtete Funktionen, insbesondere sicherheitsgerichtete Gruppen von Reihenmodulen 4, 5, 6, mit einer derart ausgebildeten Steuerungsanordnung 1 unter Verwendung des Verbindungsmoduls 63 verwirklicht werden.

Bei einer nicht dargestellten Ausführungsform sind die beiden Buskommunikationsschaltungen 43 und 76 zu einer gemeinsamen Buskommunikationsschaltung zusammengefasst.

## Patentansprüche

1. Reihenmodul für eine modular ausgebildete Steuerungsanordnung (1), mit einer ersten Reihenschnittstelle (38) und einer ersten Busschnittstelle (36) sowie einer zweiten Reihenschnittstelle (39) und einer zweiten Busschnittstelle (37), wobei zwischen den beiden Busschnittstellen (36, 37) eine Buskommunikationsleitung (11) und zwischen den beiden Reihenschnittstellen (38, 39) mehrere Verbindungsleitungen (15, 16, 17, 18, 19, 20, 21, 22, 23, 24, 25, 26, 27, 28, 29, 30, 31, 32, 33, 34) ausgebildet sind, wobei die Verbindungsleitungen (15, 16, 17, 18, 19, 20, 21, 22, 23, 24, 25, 26, 27, 28, 29, 30, 31, 32, 33, 34) zwischen den beiden Reihenschnittstellen (38, 39) zumindest teilweise Z-verkettet angeordnet sind, wobei die Verbindungsleitungen (15, 16, 17, 18, 19, 20, 21, 22, 23, 24) mehrere Verbindungsleitungspaare bilden, die jeweils eine Masseleitung und eine Versorgungsleitung umfassen und wobei wenigstens ein Verbindungsleitungspaar Z-verkettet ist.

2. Reihenmodul nach Anspruch 1, **dadurch gekennzeichnet, dass** zwei der Verbindungsleitungen (15, 16, 17, 18, 19, 20, 21, 22, 23, 24, 25, 26, 27, 28, 29, 30, 31, 32, 33, 34) jeweils ein Anschlusskontakt (54, 55, 56, 58, 59, 60, 61, 84, 85, 86, 87) zugeordnet ist, um eine Verbraucherschnittstelle (50, 51, 52) zu bilden, die zum Anschluss eines elektrischen Verbrauchers (8, 9, 10) ausgebildet ist.

3. Reihenmodul nach Anspruch 1, **dadurch gekennzeichnet, dass** der Buskommunikationsleitung (11) sowie zwei der Verbindungsleitungen (15, 16, 17, 18, 19, 20, 21, 22, 23, 24, 25, 26, 27, 28, 29, 30, 31, 32, 33, 34) jeweils wenigstens ein Anschlusskontakt (54, 55, 56, 58, 59, 60, 61, 84, 85, 86, 87) zugeordnet ist, um eine Verbraucherschnittstelle (50, 51, 52) zu bilden, die zum Anschluss eines elektrischen Verbrauchers (8, 9, 10) ausgebildet ist.

4. Reihenmodul nach Anspruch 1, 2 oder 3, **dadurch gekennzeichnet, dass** an der Buskommunikationsleitung (11) eine Buskommunikationsschaltung (43) angeschlossen ist, die zur logischen Kopplung der Buskommunikationsleitung (11) mit mehreren Signalleitungen (25, 26, 27, 28; 31, 32, 33, 34) ausgebildet ist, und dass die Signalleitungen(25, 26, 27, 28; 31, 32, 33, 34), insbesondere ausschließlich, mit einer der beiden Reihenschnittstellen (39) verbunden sind.

5. Reihenmodul nach Anspruch 4, **dadurch gekennzeichnet, dass** die Buskommunikationsschaltung (43) mit zwei der Verbindungsleitungen (15, 16, 17, 18, 19, 20, 21, 22, 23, 24, 25, 26, 27, 28, 29, 30, 31, 32, 33, 34) verbunden ist, um eine elektrische Versorgung der Buskommunikationsschaltung (43) zu gewährleisten.

6. Reihenmodul nach einem der vorhergehenden Ansprüche, **dadurch gekennzeichnet, dass** die Verbindungsleitungspaare jeweils eine Z-verkettete Masseleitung und eine Z-verkettete Versorgungsleitung umfassen.

## Claims

1. Series module for a modular designed control arrangement (1), comprising a first series interface (38) and a first bus interface (36) and a second series interface (39) and a second bus interface (37), wherein between the two bus interfaces (36, 37) a bus communication line (11) is formed and between the two series interfaces (38, 39) multiple connecting lines (15, 16, 17, 18, 19, 20, 21, 22, 23, 24, 25, 26, 27, 28, 29, 30, 31 , 32, 33, 34) are formed, wherein the connecting lines (15, 16, 17, 18, 19, 20, 21, 22, 23, 24, 25, 26, 27, 28, 29, 30, 31 , 32, 33, 34) between the two series interfaces (38, 39) are arranged at least partially Z-linked, and wherein the connecting lines (15, 16, 17, 18, 19, 20, 21, 22, 23, 24, 25, 26, 27, 28, 29, 30, 31 , 32, 33, 34) form several pairs of connecting lines, each of which comprising a ground line and a supply line, wherein at least one pair of connecting lines is Z-linked.

2. Series module according to Claim 1, **characterised in that** two of the connecting lines (15, 16, 17, 18, 19, 20, 21, 22, 23, 24, 25, 26, 27, 28, 29, 30, 31, 32, 33 , 34) are assigned a connection contact (54, 55, 56, 58, 59, 60, 61, 84, 85, 86, 87) respectively, in order to form a consumer interface (50, 51, 52), which is designed to connect an electrical consumer (8, 9, 10).

3. Series module according to Claim 1, **characterised in that** the bus communication line (11) as well as two of the connecting lines (15, 16, 17, 18, 19, 20, 21, 22, 23, 24, 25, 26, 27, 28, 29 , 30, 31, 32, 33, 34) are assigned at least one connection contact (54, 55, 56, 58, 59, 60, 61, 84, 85, 86, 87) respectively, in order to form a consumer interface (50, 51 , 52), which is designed to connect an electrical consumer (8, 9, 10).

4. Series module according to Claim 1, 2 or 3, **characterised in that** a bus communication circuit (43) is connected to the bus communication line (11), which circuit is designed for the logical coupling of the bus communication line (11) to multiple signal lines (25, 26, 27, 28; 32, 33, 34), and that the signal lines (25, 26, 27, 28; 31, 32, 33, 34), are connected, in particular exclusively, to one of the two series interfaces (39).

5. Series module according to Claim 4, **characterised in that** the bus communication circuit (43) is connected to two of the connecting lines (15, 16, 17, 18, 19, 20, 21, 22, 23, 24, 25, 26, 27, 28, 29, 30 , 31, 32, 33, 34), in order to provide an electrical supply to the bus communication circuit (43).

6. Series module according to any one of the preceding claims, **characterised in that** the pairs of connecting lines (15, 16, 17, 18, 19, 20, 21, 22, 23, 24) comprise a Z-linked ground line and a Z-linked supply line.

## Revendications

1. Module série pour un ensemble de commande (1) de réalisation modulaire, avec une première interface série (38) et une première interface de bus (36) ainsi qu'une deuxième interface série (39) et une deuxième interface de bus (37), dans lequel une ligne de communication bus (11) est réalisée entre les deux interfaces de bus (36, 37) et plusieurs lignes de liaison (15, 16, 17, 18, 19, 20, 21, 22, 23, 24, 25, 26, 27, 28, 29, 30, 31, 32, 33, 34) sont réalisées entre les deux interfaces série (38, 39), dans lequel les lignes de liaison (15, 16, 17, 18, 19, 20, 21, 22, 23, 24, 25, 26, 27, 28, 29, 30, 31, 32, 33, 34) sont disposées de manière à former au moins en partie un enchaînement en Z entre les deux interfaces série (38, 39), dans lequel les lignes de liaison (15, 16, 17, 18, 19, 20, 21, 22, 23, 24) forment plusieurs paires de lignes de liaison, qui comprennent respectivement une ligne de masse et une ligne d'alimentation, et dans lequel au moins une paire de lignes de liaison est à enchaînement en Z.

2. Module série selon la revendication 1, **caractérisé en ce que** respectivement un contact de raccordement (54, 55, 56, 58, 59, 60, 61, 84, 85, 86, 87) est associé à deux des lignes de liaison (15, 16, 17, 18, 19, 20, 21, 22, 23, 24, 25, 26, 27, 28, 29, 30, 31, 32, 33, 34) pour former une interface consommateur (50, 51, 52), qui est réalisée pour le raccordement d'un consommateur électrique (8, 9, 10).

3. Module série selon la revendication 1, **caractérisé en ce que** respectivement au moins un contact de raccordement (54, 55, 56, 58, 59, 60, 61, 84, 85, 86, 87) est associé à la ligne de communication bus (11) ainsi qu'aux deux des lignes de liaison (15, 16, 17, 18, 19, 20, 21, 22, 23, 24, 25, 26, 27, 28, 29, 30, 31, 32, 33, 34) pour former une interface consommateur (50, 51, 52) qui est réalisée pour le raccordement d'un consommateur électrique (8, 9, 10).

4. Module série selon la revendication 1, 2 ou 3, **caractérisé en ce qu'**est raccordé à la ligne de communication bus (11) un circuit de communication bus (43), qui est réalisé pour coupler de manière logique la ligne de communication bus (11) à plusieurs lignes de signaux (25, 26, 27, 28 ; 31, 32, 33, 34), et que les lignes de signaux (25, 26, 27, 28 ; 31, 32, 33, 34) sont reliées, en particulier exclusivement, à une des deux interfaces séries (39).

5. Module série selon la revendication 4, **caractérisé en ce que** le circuit de communication bus (43) est relié à deux des lignes de liaison (15, 16, 17, 18, 19, 20, 21, 22, 23, 24, 25, 26, 27, 28, 29, 30, 31, 32, 33, 34) pour assurer une alimentation électrique du circuit de communication bus (43).

6. Module série selon l'une quelconque des revendications précédentes, **caractérisé en ce que** les paires de lignes de liaison comprennent respectivement une ligne de masse à enchaînement en Z et une ligne d'alimentation à enchaînement en Z.
